Europäisches Patentamt

European Patent Office

Office européen des brevets

(19)

(11) Publication number: **0 168 966**
A2

(12) # EUROPEAN PATENT APPLICATION

(21) Application number: 85304249.7

(22) Date of filing: 14.06.85

(51) Int. Cl.⁴: **B 60 N 1/12,** B 60 R 22/00

(30) Priority: 16.06.84 GB 8415425

(43) Date of publication of application: 22.01.86
Bulletin 86/4

(84) Designated Contracting States: DE FR GB IT NL SE

(71) Applicant: Britax-Excelsior Limited, Chertsey Road
Byfleet, GB-Surrey KT14 7AW (GB)

(72) Inventor: Burleigh, David William, 65 Craigwell Lane,
Aldwick Bognor Regis West Sussex (GB)
Inventor: Cunningham, Douglas James, 42 Viking Way,
Horndean Portsmouth Hampshire (GB)
Inventor: Roberts, Adrian Keith, 10 Martins Drive,
Wokingham Berkshire (GB)

(74) Representative: Hollinghurst, Antony, Britax Division
(Patents) Kingsham Road, Chichester West Sussex
PO19 2UG (GB)

(54) **Infant safety seats.**

(57) An infant safety seat comprises a rigid body (10) having a
back rest portion (14) and a seat portion (12), and a frame (32)
for supporting the seat body on a substantially horizontal surface so that a seated occupant faces rearwardly in the vehicle.
The seat body is provided with formations (40) for engagement
with a lap portion (38) of an adult safety belt so as to restrain
the seat body against forward movement. Guide means (44)
are provided on the side of the back rest portion (14) facing
away from the occupant for receiving a shoulder portion (42)
of an adult safety belt so as to permit relative movement in the
longitudinal direction of the shoulder belt while constraining
movement in transverse directions relative to the shoulder belt
within a predetermined range.

ACTORUM AG

"Infant Safety Seats"

This invention relates to safety seats for use by infants in motor vehicles of the type comprising a rigid body having a back rest portion and a seat portion, a frame for supporting the seat body on a substantially horizontal surface so that a seated occupant faces rearwardly in the vehicle, and means secured to the seat body for engagement with a lap portion of an adult safety belt so as to restrain the seat body against forward movement.

Safety seats of this type are disclosed in Patent Specifications US-A-4186961 and US-A-4231612. Both of these safety seats are arranged to be held in place on a vehicle seat using an adult lap belt or the lap part of an adult lap-and-diagonal belt, the diagonal or shoulder part being kept out of the way. In US-A-4186961 an auxiliary strap links the top of the back rest of the infant seat with one of the floor anchorages of the adult safety belt.

Safety seats of the type described in the above-mentioned U.S. specifications suffer from the disadvantage that, when the vehicle is subject to high deceleration, the forward dynamic force produced by the inertia of the infant seat and its occupant, results in the imposition of a downward force on the vehicle seat cushion, which has the result of permitting an undesirably large amount of forward movement of the infant seat relative to the adult seat belt anchorages. The present invention aims to mitigate this problem.

According to the invention, an infant safety seat of the above-mentioned type is provided with guide means on the side of the back rest portion facing away from the occupant, for receiving a shoulder portion of an adult safety belt so as to constrain relative movement in transverse directions relative to the shoulder belt within a predetermined range.

The guide means may be adapted to permit movement of the shoulder belt relative thereto in the longitudinal direction of the shoulder belt.

The guide means may comprise at least two guide members, one located adjacent to the top corner of the back rest portion on the same side as the shoulder anchorage of the adult safety belt and the other located adjacent to the other side of the back rest portion on the normal path of the adult belt to its floor anchorage. In order to permit use of the infant seat on either side of the car, it is necessary to provide two sets of such guide members and this creates a risk that a user may connect the adult belt to the wrong guide members. To avoid this possibility, the guide means preferably comprises a single guide member located on the vertical centre line of the seat back portion at a vertical position not lower than the combined centre of gravity of the infant seat and its occupant.

Preferably the guide means comprises a member having a slot-like aperture therein through which the shoulder belt portion passes and which is pivotally mounted on the backrest portion of the seat for angular movement about an axis perpendicular to the adjacent surface of the backrest.

The guide means may be constructed so as to permit the shoulder belt portion to be detached therefrom. For example an opening may be provided in the side of the slot opposite to the pivot.

An embodiment of the invention will now be described, by way of example, with reference to the accompanying drawings in which:-

Figure 1 is a transverse cross-sectional view of a rear seat of a motor car showing an infant safety seat in accordance with the invention inside elevation;

Figure 2 is an elevational view from the front, of the assembly shown in Figure 1; and

Figure 3 is a fragmentary view showing a component of the embodiment illustrated in Figures 1 and 2 on an enlarged scale.

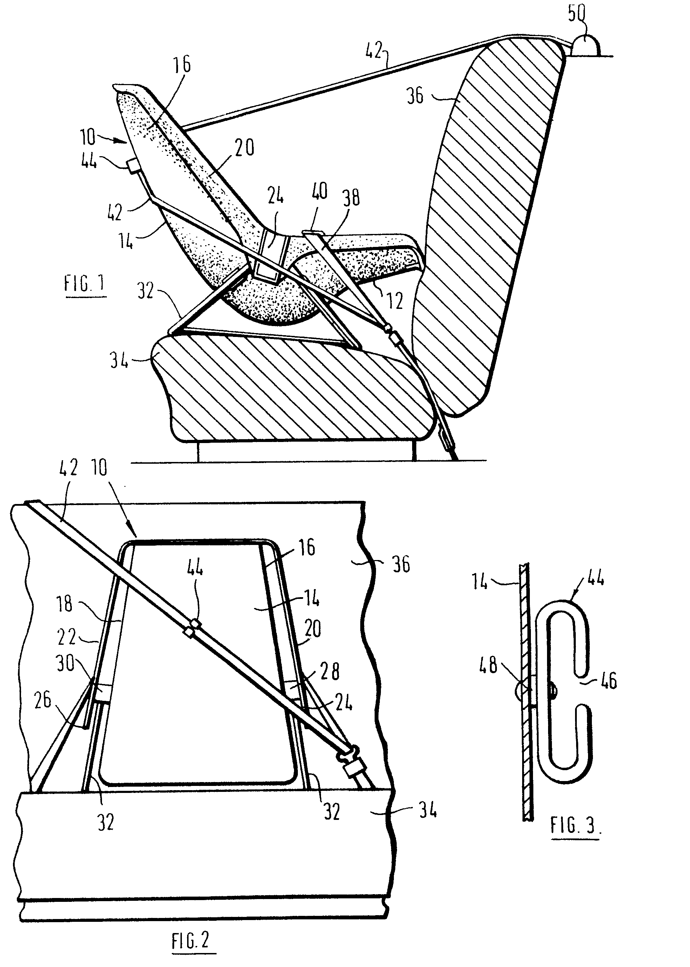

Figures 1 and 2 show an infant seat 10 having a seat portion 12, a back portion 14 and side walls 16 and 18, each of which has a respective turned-down flange 20, 22 on its outer edge. Adjacent to the junction between the seat portion 12 and the back portion 14, each of the flanges 20 and 22 has a respective extended portion 24, 26 which is linked to the adjacent side wall 16, 18 by a respective reinforcing rib 28, 30 and which incorporates means (not shown) whereby the infant seat 10 is secured to a support frame 32.

In use, the infant seat 10 is positioned on the rear seat of a motor car with the back portion 14 facing towards the front of the vehicle and the support frame 32 resting on the vehicle seat cushion 34 with the front edge of its seat portion 12 abutting the backrest 36 of the adult seat. The infant seat 10 is secured in position by means of the lap strap 38 of an adult lap-and-diagonal safety belt, the lap strap 38 engaging under hook-like formations 40 on the upper edge of each of the side walls 16 and 18 adjacent to the seat portion 12 of the infant seat 10.

In accordance with the invention, the shoulder strap 42 of the adult safety belt extends around the back portion 14 of the infant seat 10 where it engages in a guide member 44. As can best be seen in Figure 3, the guide member 44 comprises an elongate loop having an opening 46 at an intermediate position along one side and a pivotal mounting 48, by which it is secured to the back rest 14 on the infant seat 10. The guide member 44 thus constrains the shoulder strap 42 to pass across the back 14 of the infant seat 10 at a predetermined position without interferring with movement of the strap therethrough, for example under the influence of a retractor 50 mounted adjacent to the top of the backrest 36 of the vehicle seat. When the infant seat 10 is to be removed from the vehicle, the shoulder strap 42 can be disengaged from the clip 44 through the slot 46.

The clip 44 is positioned on the vertical centre line of the infant seat 10. Preferably its vertical position is not lower than that of the combined centre of gravity of the infant seat 10 and its occupant. It is therefore best positioned so as to be coincident with the combined centre of gravity of the seat 10 and the largest occupant with which it is intended to be used.

The seat 10 is provided with a conventional harness for retaining an infant therein.

Instead of the clip 44, correspondingly shaped projections may be moulded integrally with the back portion 14 of the seat 10.

CLAIMS

1. An infant safety seat comprising a rigid body (10) having a back rest portion (14) and a seat portion (12), a frame (32) for supporting the seat body on a substantially horizontal surface so that a seated occupant faces rearwardly in the vehicle, and means (40) secured to the seat body for engagement with a lap portion (38) of an adult safety belt so as to restrain the seat body against forward movement, characterised by guide means (44) on the side of the back rest portion (14) facing away from the occupant, for receiving a shoulder portion (42) of an adult safety belt so as to constrain relative movement in transverse directions relative to the shoulder belt (42) within a predetermined range.

2. An infant safety seat according to claim 1, wherein the guide means (44) is adapted to permit movement of the shoulder belt (42) relative thereto in the longitudinal direction of the shoulder belt (42).

3. An infant safety seat according to claim 1 or 2, wherein the guide means comprises at least two guide members, one located adjacent to the top corner of the back rest portion (14) on the same side as the shoulder anchorage (50) of the adult safety belt (42) and the other located adjacent to the other side of the back rest portion (14) on the normal path of the adult belt to its floor anchorage.

4. An infant safety seat according to claim 1 or 2, wherein the guide means comprises a single guide member (44) located on the vertical centre line of the seat back portion (14) at a vertical position not lower than the combined centre of gravity of the infant seat and its occupant.

5. An infant safety seat according to claim 4, wherein the guide member (44) has a slot-like aperture therein through which the shoulder belt portion (42) passes.

6. An infant safety seat according to claim 5, wherein the guide member (44) is pivotally mounted on the backrest portion (14) of the seat for angular movement about an axis perpendicular to the adjacent surface of the backrest.

7.     An infant safety seat according to claim 5 or 6, wherein the guide member (44) is constructed so as to permit the  shoulder  belt portion (42) to be detached therefrom.

8.     An infant safety seat  according  to  claim  7,  wherein the guide member (42) has  an  opening  (46)  in  the side of the slot opposite to the pivot.

1/1

0168966

FIG.1

FIG.2

FIG. 3.